# EUROPÄISCHE PATENTANMELDUNG

(11) **EP 4 283 177 A1**
(43) Veröffentlichungstag der Anmeldung: **29.11.2023**
(21) Anmeldenummer: 23174977.1
(22) Anmeldetag: 23.05.2023
(51) Int. Cl.: F16L 55/32, F16L 101/12

(54) **ANTRIEBSEINHEIT FÜR EINEN MOLCH**

(30) Priorität: 23.05.2022 DE 102022112866
(71) Anmelder: Algoliner GmbH & Co. KG, 64409 Messel (DE)
(72) Erfinder: Väth, Hans, 64409 Messel (DE)
(74) Vertreter: Habermann Intellectual Property Partnerschaft von Patentanwälten mbB

(57) **Zusammenfassung**

Die Erfindung betrifft eine Antriebseinheit (1) für einen Molch (19) zum Antrieb des Molchs (19) in einem Rohrabschnitt (22), wobei die Antriebseinheit (1) ein Gehäuse (2) und mindestens eine an dem Gehäuse (2) gelagerte Antriebseinrichtung aufweist. Die Antriebseinheit (1) weist einen die Antriebseinrichtung aufweisenden Rotationsabschnitt (3) und einen Axialführungsabschnitt (4) auf, wobei der Rotationsabschnitt (3) relativ zu dem Axialführungsabschnitt (4) um eine Rotationsachse (5) rotieren kann und mindestens ein in einer radialen Richtung senkrecht zur Rotationsachse (5) nach außen über das Gehäuse (2) vorspringendes Antriebsrad (8) aufweist. Bei einer bestimmungsgemäßen Benutzung der Antriebseinheit (1) in dem Rohrabschnitt (23) rollt das mindestens eine Antriebsrad (8) des Rotationsabschnitts (3) bei einer Rotation des Rotationsabschnitts (3) an der Innenwandung (23) des Rohrabschnitts (3) entlang einer schraubenförmigen Abrollbahn ab, sodass die Antriebseinheit (1) bei einer Rotation des Rotationsabschnitts (3) in dem Rohrabschnitt (22) entlang der axialen Richtung der schraubenförmigen Abrollbahn angetrieben und verlagert wird.

## Beschreibung

Die Erfindung betrifft eine Antriebseinheit für einen Molch zum Antrieb des Molchs in einem Rohrabschnitt, wobei die Antriebseinheit ein Gehäuse und mindestens eine an dem Gehäuse gelagerte Antriebseinrichtung aufweist, durch welche die Antriebseinheit bei einer bestimmungsgemäßen Benutzung in dem Rohrabschnitt verlagert wird.

Rohre oder Rohrabschnitte werden in nahezu jeder klein- oder großtechnischen industriellen Anlage für die Beförderung von festen, flüssigen oder gasförmigen Produktkomponenten verwendet. Zur Installation, zur Überwachung sowie zur Wartung und Reinigung einzelner Rohrabschnitte können Molche eingesetzt werden. Unter einem Molch wird ein oft tropfenförmiges oder zylinderförmiges technisches Gerät verstanden, welches zur Reinigung oder Inspektion des Rohrabschnitts verwendet wird und zu diesem Zweck durch den Rohrabschnitt hindurch verlagert werden kann. Meist ist dabei der Molch mit seiner Formgebung an einen zu reinigenden Rohrabschnitt oder an einen Rohrdurchmesser angepasst.

Der Molch kann dabei beispielsweise eine Reinigungsvorrichtung aufweisen, welche dazu eingerichtet ist, bei einer Verlagerung des Molchs innerhalb des Rohrabschnitts an einer Innenwandung des Rohrabschnitts anhaftende Ablagerungen mechanisch zu entfernen. Hierfür sind aus dem Stand der Technik an einem Gehäuse des Molchs angeordnete Reinigungsbürsten, Lamellen, Schaber, sowie verschieden ausgeführte Scheid oder Kratzwerkzeuge bekannt.

Übliche Ausführungsvarianten von Molchen weisen zur Verlagerung des Molchs innerhalb des Rohrabschnitts eine Antriebseinheit mit einer Antriebseinrichtung auf. Die Antriebseinrichtung kann dabei beispielsweise als ein an dem Gehäuse des Molchs festgelegtes Seil ausgestaltet sein kann, welches ab- oder aufgewickelt werden kann, wobei der Molch über auf das Seil einwirkende Zugkräfte durch den Rohrabschnitt gezogen werden kann. Eine derartige Ausgestaltung hat jedoch den Nachteil, dass mit einem Seil nur Zugkräfte in eine Richtung übertragen werden können und eine Verlagerung des Molchs in die entgegengesetzte Richtung nicht durch das Seil bewirkt werden kann. Es sind auch biegeelastische und in axialer Richtung formstabile flexible Spiralen bekannt, mit denen ein Molch durch einen Rohrabschnitt sowohl geschoben als auch gezogen werden kann und dadurch in beide Richtungen verlagert werden kann. Allerdings wird mit zunehmender Länge eines Rohrabschnitts die Verwendung derartiger flexibler Spiralen immer aufwendiger. Zudem treten bei jeder Rohrkrümmung Reibungskräfte auf, die eine Betätigung der flexiblen Spiralen und damit eine Verlagerung des Molchs in dem Rohrabschnitt zunehmen erschweren.

Weiterhin können Molche, welche durch ihre Formgebung an den zugeordneten Rohrabschnitt angepasst sind, alleine durch den Druck des in dem Rohrabschnitt beförderten Mediums wie beispielsweise einer Flüssigkeit oder eines Gases in dem Rohrabschnitt verlagert und vorangetrieben werden. Derartige Antriebseinrichtungen sind jedoch als ineffizient anzusehen, da sie insbesondere bei einem Antrieb durch Druck nicht in der Lage sind, effektiv in ihrer Geschwindigkeit reguliert zu werden. Zudem ist es ohne größeren Aufwand kaum möglich, eine Bewegungsrichtung des Molchs umzukehren oder den Molch für Wartungs- oder Inspektionsarbeiten in dem Rohabschnitt zum Stillstand zu bringen.

Als Aufgabe der vorliegenden Erfindung wird es deshalb angesehen, eine Antriebseinheit für einen Molch bereitzustellen, mit welcher der Molch in einfacher Weise in einem Rohrabschnitt kontrolliert in beide Richtungen verlagerbar ist.

Die Erfindung wird dadurch gelöst, dass die Antriebseinheit einen die Antriebseinrichtung aufweisenden Rotationsabschnitt und einen Axialführungsabschnitt aufweist, die in einer axialen Richtung hintereinander angeordnet sind, wobei der Rotationsabschnitt relativ zu dem Axialführungsabschnitt um eine Rotationsachse rotieren kann und die Rotationsachse parallel zu der axialen Richtung verläuft, und wobei der Rotationsabschnitt mindestens ein in einer radialen Richtung senkrecht zu Rotationsachse nach außen über das Gehäuse vorspringendes Antriebsrad aufweist, dessen Ausrichtung durch eine Ausrichtung einer Rotationsachse des Antriebsrads vorgegeben ist, wobei eine Projektion der Rotationsachse des mindestens einen Antriebsrads auf eine Projektionsebene, in welcher die Rotationsachse des Rotationsabschnitts verläuft, die Rotationsachse des Rotationsabschnitt in einem spitzen Winkel schneidet, und wobei der Axialführungsabschnitt eine Axialführungseinrichtung aufweist, wobei bei einer bestimmungsgemäßen Benutzung des Axialführungsabschnitts durch eine Wirkverbindung der Axialführungseinrichtung mit einer Innenwandung des Rohrabschnitts eine einem Rotationsdrehmoment des rotierenden Rotationsabschnitts entgegengesetztes Führungsdrehmoment erzeugt wird, sodass der Axialführungsabschnitt bei einer Rotation des Rotationsabschnitts in Umfangsrichtung rotationsfest in dem Rohrabschnitt in der axialen Richtung verlagerbar ist, und wobei bei einer bestimmungsgemäßen Benutzung der Antriebseinheiten im Rohrabschnitt das mindestens eine Antriebsrad des Rotationsabschnitts bei einer Rotation des Rotationsabschnitts entlang einer schraubenförmigen Abrollbahn abrollt, sodass die Antriebseinheit bei einer Rotation des Rotationsabschnitts in dem Rohrabschnitt entlang einer axialen Richtung der schraubenförmigen Abrollbahn angetrieben und verlagert wird.

Die Antriebseinheit ist dazu eingerichtet, bei einer bestimmungsgemäßen Anordnung in einem Rohrabschnitt sich in diesem Rohrabschnitt verlagern zu können, ohne dass eine Wirkverbindung mit der Umgebung wie beispielsweise ein Zugseil, eine Antriebsspirale oder ein durch äußere Kräfte durch den Rohrabschnitt gefördertes Medium zwingend erforderlich ist. Durch die Verwendung einer angetriebenen Antriebseinheit mit mindestens einem Antriebsrad kann die Geschwindigkeit der Antriebseinheit zu jedem Zeitpunkt reguliert werden, wobei die Geschwindigkeit der Antriebseinheit nicht von einem in dem Rohrabschnitt beförderten Medium abhängig ist. So kann die Antriebseinheit gegebenenfalls auch gleichzeitig mit einem Medium durch den Rohrabschnitt verlagert werden und ein Molch mit der Antriebseinheit den Rohrabschnitt inspizieren oder reinigen, ohne dass der Rohrabschnitt abgesperrt werden muss oder nicht anderweitig benutzt werden darf.

Hierzu weist die Antriebseinheit für einen Molch einen Rotationsabschnitt und einen Axialführungsabschnitt auf, welche in einer axialen Richtung hintereinander angeordnet sind. Diese axiale Richtung entspricht bei einer bestimmungsgemäßen Anordnung der Antriebseinheit in einem Rohrabschnitt dem dortigen Verlauf einer Mittenlinie des Rohrabschnitts. Über eine Rotation des Rotationsabschnitts um die Rotationsachse kann die Antriebseinheit in dem Rohrabschnitt längs der axialen Richtung verlagert werden. Die Rotationsachse verläuft parallel oder deckungsgleich zu der axialen Richtung. Das mindestens eine Antriebsrad rollt an einer Innenwand des Rohrabschnitts ab. Durch den spitzen Winkel zwischen den Rotationsachsen dreht sich das Antriebsrad nicht parallel zu der Rotationsachse des Rotationsabschnitts, sondern in einem vorgebbaren Winkel dazu, sodass bei einer Abrollbewegung in Umfangsrichtung jeweils eine Bewegung des Antriebsrads auch in der axialen Richtung erzwungen wird und dadurch der Molch längs der axialen Richtung verlagert wird. Bei einer Regulierung der Rotationsgeschwindigkeit des Rotationsabschnitts ist es möglich, die Geschwindigkeit der Antriebseinheit in dem Rohrabschnitt anzupassen und gegebenenfalls die Antriebseinheit indem Rohrabschnitt zu stoppen. Somit können mögliche anstehende Arbeiten oder Inspektionen in dem Rohrabschnitt durchgeführt werden. Bei einer erneuten Rotation des Rotationsabschnitts kann die Antriebseinheit weiter in dem Rohrabschnitt verlagert werden.

Insbesondere bei in dem zu reinigenden Rohrabschnitt anhaftenden Biofilmen, wie sie vor allem in Photobioreaktoren auftreten können, kann sich die Haftreibung zwischen dem mindestens einen Antriebsrad und der Innenfläche des Rohrabschnitts verändern, wodurch der Vortrieb der Antriebseinheit in dem Rohrabschnitt verlangsamt oder gegebenenfalls zum Erliegen kommt. In diesem Fall kann der Antrieb zusätzlich zu dem Vortrieb mit Hilfe des mindestens einen Antriebsrads durch beispielsweise eine Strömung oder einen statischen Druck eines flüssigen oder gasförmigen Mediums erfolgen, welches durch den Rohrabschnitt gedrückt wird. Ein derartiger zusätzlicher Antrieb kann vorzugsweise dann erfolgen, wenn durch eine geeignete Sensorvorrichtung erkannt wird, dass eine gewünschte vorgegebene Vorschubgeschwindigkeit der Antriebseinheit nicht erreicht werden kann.

Ein spitzer Winkel ist üblicherweise für zwei sich schneidende Geraden beziehungsweise Achsen definiert. Die Rotationsachsen des Rotationsabschnitts und des Antriebsrads oder der gegebenenfalls mehreren Antriebsräder müssen sich im Raum nicht schneiden. Um einen spitzen Winkel definieren zu können kann entweder eine Projektion einer Rotationsachse auf eine Ebene, in welcher die andere Rotationsachse verläuft, oder aber eine Parallelverschiebung einer Rotationsachse hin zu der anderen Rotationsachse vorgenommen werden, sodass die projizierte Rotationsachse oder die parallelverschobene Rotationsachse die andere Rotationsachse schneidet. Nachfolgend wird vereinfachend ein spitzer Winkel zwischen zwei Rotationsachsen definiert, ohne jeweils die dafür notwendige Projektion oder Parallelverschiebung explizit anzugeben.

Die Rotationsachse des mindestens einen nach außen vorspringenden Antriebsrads weist dabei zu der Rotationsachse des Rotationsabschnitts einen spitzen Winkel auf. Der spitze Winkel zwischen den beiden Rotationsachsen kann dabei einen Wert zwischen 0 und 90 Grad aufweisen. In vielen Anwendungsfällen weist der spitze Winkel in vorteilhafter Weise einen Wert zwischen 5 und 45 Grad auf, wobei der spitze Winkel besonders vorzugsweise einen Wert zwischen 10 und 15 Grad aufweist. Bei einer Rotation des Rotationsabschnitts rollt das mindestens eine Antriebsrad an einer Innenwandung des Rohrabschnitts ab, wobei das mindestens eine Antriebsrad nicht parallel zu der Rotation des Rotationsabschnitts, sondern in einem spitzen Winkel dazu ausgerichtet ist, sodass das Antriebsrad bei einer Rotation des Rotationsabschnitts eine schraubenförmige Abrollbahn entlang der Innenwandung des Rohrabschnitts entlangfährt und dadurch eine axiale Verlagerung der Antriebseinheit entlang des Rohrabschnitts erzwungen wird. Falls mehrere Antriebsräder über den Umfang des Rotationsabschnitts verteilt angeordnet sind weisen vorteilhafterweise alle an dem Gehäuse angeordneten Antriebsräder denselben Winkel auf, sodass ein reibungsarmes Abrollen entlang der Abrollbahn ermöglicht wird.

Bei einer Rotation des Rotationsabschnitts wird ein Rotationsdrehmoment erzeugt. Bei einer bestimmungsgemäßen Anordnung der Antriebseinheit in dem Rohrabschnitt kann der Axialführungsabschnitt durch eine Wirkverbindung des Axialführungsabschnitts und dabei insbesondere durch eine in axialer Richtung verlaufende Zwangsführung der Axialführungseinrichtung mit der Innenwandung ein dem Rotationsdrehmoment entgegengesetztes Führungsdrehmoment entgegengesetzt werden. Durch das dem Rotationsdrehmoment entgegengesetzte Führungsdrehmoments wird verhindert, dass die rotierende Relativbewegung zwischen dem Rotationsabschnitt und dem Axialführungsabschnitt dazu führt, dass der Rotationsabschnitt relativ zu der Innenwandung des Rohrabschnitts unbeweglich verharrt und der Axialführungsabschnitt um seine eigene Längsachse rotiert. Durch die Zwangsführung des Axialführungsabschnitts entlang der axialen Richtung in dem Rohrabschnitt wird die Rotationsbewegung des Rotationsabschnitts relativ zu der Innenwandung des Rohrabschnitts erzwungen und dadurch die Antriebseinheit in dem Rohrabschnitt in axialer Richtung verlagert.

Die Verlagerungsrichtung der Antriebseinheit kann durch die Rotationsrichtung des Rotationsabschnitts um die Rotationsachse vorgegeben werden, wobei die Anordnung des Rotationsabschnitts und des Axialführungsabschnitts entlang der axialen Richtung beliebig gestaltet werden kann. Für einen Vortrieb der Antriebseinheit kann der Rotationsabschnitt selbst angetrieben werden, wobei auch ein Antrieb des an dem Gehäuse im Bereich des Rotationsabschnitts angeordneten mindestens einen Antriebsrads erfindungsgemäß denkbar ist. Ein gesonderter Antrieb des mindestens einen Antriebsrads kann für einzelne Anwendungsfälle vorteilhaft sein, geht jedoch oftmals mit einem erhöhten mechanischen Aufwand für den Antrieb einher.

Gemäß einer vorteilhaften Umsetzung des Erfindungsgedankens ist vorgesehen, dass der Rotationsabschnitt eine Lagereinrichtung aufweist, wobei das mindestens eine Antriebsrad an der Lagereinrichtung gelagert ist. Die Lagereinrichtung kann an einer Außenfläche des Gehäuses im Bereich des Rotationsabschnitts angeordnet sein. Die Lagereinrichtung ist vorzugsweise ringförmig oder hülsenförmig ausgebildet und an dem Gehäuse angeordnet, sodass die Lagereinrichtung bei einer Rotation des Rotationsabschnitts ebenfalls um die Rotationsachse des Rotationsabschnitts rotiert. Die Lagereinrichtung kann dabei einstückig an dem Gehäuse im Bereich des Rotationsabschnitts ausgebildet sein, oder als separates Bauelement das Gehäuse teilweise oder vollständig umgreifend an dem Gehäuse angeordnet und festgelegt sein. Für eine einfache Montage und Demontage der Lagereinrichtung kann die Lagereinrichtung austauschbar an dem Gehäuse angeordnet sein, wobei die Lagereinrichtung über beispielsweise eine klemmende Verbindung, eine Steckverbindung oder einen Bajonettverschluss an dem Gehäuse festlegbar ist. Weiterhin kann die Lagereinrichtung im Bereich des Rotationsabschnitts in axialer Richtung die Breite des Rotationsabschnitts aufweisen, oder diesen nur teilweise bedecken. Die Lagereinrichtung ist weiterhin dazu eingerichtet, dass mindestens eine Antriebsrad rotierbar an dem Gehäuse zu lagern.

In vorteilhafter Weise ist optional vorgesehen, dass die Lagereinrichtung mindestens einen gekrümmten und in der radialen Richtung abstehenden Lagerarm mit mindestens einem nicht radial nach außen verlaufenden Bereich aufweist. Der mindestens eine Lagerarm kann als ein in einer radialen Richtung von dem Rotationsabschnitt abstehenden zumindest abschnittsweise gekrümmten Fortsatz ausgebildet sein, sodass mindestens ein Bereich der Lagerungseinrichtung nahezu tangential zu der Oberfläche des Rotationsabschnitts angeordnet ist. Der mindestens eine Lagerarm der Lagereinrichtung ist dabei so ausgestaltet, dass das mindestens eine Antriebsrad an dem mindestens einen Lagerarm rotierbar gelagert ist. Der mindestens eine Lagerarm kann dabei beispielsweise eine Lagerung für ein Ende einer Antriebsradnabe des mindestens einen Antriebsrades aufweisen. Es ist ebenfalls möglich, dass der Lagerarm an einem Ende eine Gabelung aufweist, wobei das mindestens eine Antriebsrad zwischen zwei beabstandeten Gabelschenkeln angeordnet und über die Gabelung an zwei Seiten der Antriebsradnabe gelagert werden kann. Durch die Lagerung des Antriebsrads an dem Lagerarm wird die Ausrichtung der Rotationsachse des Antriebsrads vorgegeben.

Durch eine geeignete Formgebung und Ausgestaltung des Lagerarms und gegebenenfalls auch der Lagereinrichtung kann ein Einfedern des mindestens einen Antriebsrads in einer radialen Richtung ermöglicht werden. Durch die Einfederung eines Antriebsrads können insbesondere bei einem Durchfahren der Antriebseinheit durch einen gekrümmten Rohrabschnitt unterschiedliche Abrollbewegungen von mindestens zwei verwendeten Antriebsrädern realisiert werden, wodurch für alle Antriebsräder eine schlupffreie Abrollbewegung innerhalb des gekrümmten Rohrabschnitts ermöglicht wird. Auf diese Weise können beispielsweise auch Unebenheiten an der Innenwandung des Rohrabschnitts ausgeglichen werden. Es ist ebenfalls möglich, dass die Antriebseinheit einem gekrümmten Verlauf des Rohrabschnitts folgt und dabei durch die federnde Lagerung der einen Antriebsrads oder vorzugsweise der mehreren Antriebsräder eine Verschwenkung des Rotationsabschnitts relativ zu einer Mittenachse des Rohrabschnitts ermöglicht wird.

Einer vorteilhaften Ausgestaltung des Erfindungsgedankens zu Folge ist vorgesehen, dass das mindestens eine Antriebsrad an zwei Lagerarmen gelagert ist, wobei jeweils ein Lagerarm an eine Seite einer Antriebsradnabe des mindestens einen Antriebsrad festgelegt ist. Die Lagereinrichtung kann dabei zwei in der radialen Richtung von dem Rotationsabschnitt vorspringenden Lagerarme aufweisen, welche jeweils an einer Seite der Antriebsradnabe des mindestens einen Antriebsrads festgelegt sind. Vorteilhafterweise sind die zwei des mindestens eine Antriebsrad tragende Lagerarme so ausgestaltet, dass sie einen bogenförmigen Verlauf aufweisen und das mindestens eine Antriebsrad in einem mittleren Bereich des bogenförmigen Verlaufs gelagert ist. Durch den bogenförmigen Verlauf der zwei Lagerarme ist es möglich, dass das an den Lagerarmen gelagerte mindestens eine Antriebsrad in radialer Richtung federnd gelagert ist und in einer radialen Richtung einfedern kann, um etwaige Unebenheiten einer Innenwandung des Rohrabschnitts auszugleichen.

Es ist auch möglich und erfindungsgemäß optional vorgesehen, dass der oder die mehreren Lagerarme der Lagereinrichtung elastisch verformbar ausgestaltet ist, wobei das mindestens eine Antriebsrad über eine elastische Verformung des betreffenden Lagerarms in einer radialen Richtung verlagerbar ist, sodass ein Abstand zwischen dem mindestens einen Antriebsrad und dem Gehäuse veränderbar ist. Durch die elastische Ausgestaltung der das mindestens eine Antriebsrad lagernden Lagerarme kann die Antriebseinheit insbesondere bei der Verlagerung der Antriebseinheit entlang einer Krümmung eines Rohrabschnitts in dem Rohrabschnitt entlangbewegt werden. Dabei können ein Antriebsrad oder mehrere der rotierbar gelagerten Antriebsräder in einer radialen Richtung einfedern, um die Antriebseinheit um die Krümmung des Rohrabschnitts zu bewegen zu können. Die Lagereinrichtung kann beispielsweise aus einem elastisch verformbaren Kunststoff wie einem Elastomer oder auch Gummi realisiert werden. Weiterhin sind verschiedene Metalle oder Verbundwerkstoffe denkbar, welche elastisch verformbar sind und ein Einfedern des mindestens einen Antriebsrads ermöglichen.

Vorzugsweise ist vorgesehen, dass die Lagereinrichtung mehrere entlang der Umfangsrichtung des Rotationsabschnitts beabstandet zueinander angeordnete Antriebsräder aufweist. Durch die Verwendung von mehreren Antriebsrädern kann eine gleichbleibende Kraftverteilung der Antriebsräder auf die Innenwandung des Rohrabschnitts ermöglicht sowie der Rotationsabschnitt in dem Rohrabschnitt zentriert werden. Durch eine gleichmäßige Kraftverteilung kann die auf die Lagerarme einwirkende Kraft reduziert und damit einem Bruch oder plastischen Verformung der Lagerarme vorgebeugt werden. Hierzu kann die Lagereinrichtung vorzugsweise mindestens zwei sich an der Lagereinrichtung angeordnete Antriebsräder aufweisen, welche sich besonders vorzugsweise auf sich gegenüberliegenden Seiten der Rotationseinrichtung angeordnet sind. Bei der Verwendung von drei oder mehreren Antriebsrädern sind diese vorzugsweise entlang der Umfangsrichtung des Rotationsabschnitts äquidistant angeordnet. Neben dem Antrieb des Rotationsabschnittes können auch ein oder mehrere der Antriebsräder separat angetrieben werden, wobei durch den Antrieb eines Antriebsrads der Rotationsabschnitt um die Rotationsachse rotiert.

Optional ist vorgesehen, dass der spitze Winkel bei der elastischen Verformung des Lagerarms vergrößert oder verkleinert wird. Dies kann beispielsweise durch eine asymmetrische Ausgestaltung des Lagerarms bewirkt werden. Durch eine derart elastisch verformbare Ausgestaltung des Lagerarms kann sich bei einem Durchfahren eines gekrümmten Rohabschnitts der spitze Winkel, welcher auch als Lenkwinkel bezeichnet werden kann, der einzelnen Antriebsräder verändern, wodurch ein Schlupf der Antriebsräder verhindert oder zumindest reduziert werden kann. Bei einem Einfahren in den gekrümmten Rohrabschnitt wird ein erstes Antriebsrad gegen die Innenwandung gedrückt und federt ein, wodurch der der Abstand des Antriebsrades zur Rotationsachse des Rotationsabschnitts reduziert wird und sich der Lenkwinkel des ersten Antriebsrads erhöht. Ein dem ersten Antriebsrad gegenüberliegendes Antriebsrad kann sich, durch die elastische Lagerung der Abstand eines zweiten Antriebsrads von der Rotationsachse des Rotationsabschnitts erhöhen, wodurch der Lenkwinkel des zweiten Antriebsrads reduziert wird. Bei einem Durchfahren des gekrümmten Rohrabschnitts kann sich daher der Lenkwinkel der einzelnen Antriebsräder fortlaufend während einer Umdrehung des Rotationsabschnitts erhöhen. Die Änderung des Lenkwinkel ist dabei abhängig von einer Einfedertiefe des jeweiligen Antriebsrads, wobei sich die Lenkwinkel der jeweiligen Länge des gekrümmten Rohrabschnitts anpassen kann. Beim Verlassen des gekrümmten und Einfahren in einen geraden Rohrabschnitts kann die Antriebseinheit wieder in dem Rohrabschnitt zentriert werden.

Des Weiteren ist es möglich und erfindungsgemäß optional vorgesehen, dass die Axialführungseinrichtung mindestens zwei in Umfangsrichtung auf gegenüberliegenden Seiten des Axialführungsabschnitts angeordnete in einer radialen Richtung nach außen über das Gehäuse vorspringende Axialführungselemente aufweist. Die Axialführungselemente sind dazu eingerichtet, dass die Antriebseinheit bei einer bestimmungsgemäßen Anordnung der Antriebseinheit in einem Rohrabschnitt über die Axialführungselemente an einer Innenwandung des Rohrabschnitts anliegt. Durch eine Wirkverbindung der Axialführungselemente mit der Innenwandung ist es möglich, eine dem Rotationsdrehmoment entgegengesetztes Führungsdrehmoment zu erzeugen, wobei der Axialführungsabschnitt rotationssicher in dem Rohrabschnitt angeordnet ist. Durch eine Rotation des Rotationsabschnitts ist der zwangsgeführte Axialführungsabschnitt und damit die Antriebseinheit in einer axialen Richtung entlang des Rohrabschnitts verlagerbar. Durch die Verwendung von zwei oder mehr jeweils auf einander gegenüberliegenden Seiten des Axialführungsabschnitts angeordneten Axialführungselementen kann die Antriebseinheit zusätzlich in dem zugeordneten Rohrabschnitt zentriert werden. Die Axialführungselemente können dabei mit einer beispielsweise als einen Gleitschuh ausgebildeten Kontaktfläche an der Innenwandung des Rohrabschnitts anliegen und/oder einen teilweise oder vollständig die Kontaktfläche des Gleitschuhs überziehenden Überzug aufweisen, um die Reibung bei einer Verlagerung der Antriebseinheit in axialer Richtung zu verringern.

Gemäß einer vorteilhaften Umsetzung des Erfindungsgedankens ist vorgesehen, dass das Axialführungselement mindestens ein bei einer bestimmungsgemäßen Benutzung der Antriebseinheit an der Innenwandung des Rohrabschnitts anliegendes Axialführungsrad aufweist, wobei die Rotationsachse des mindestens einen Axialführungsrads orthogonal zu der Rotationsachse des Rotationsabschnitts angeordnet ist. Durch die Verwendung eines Axialführungsrads, welches an der Innenwandung des Rohrabschnitts anliegt, kann in einer axialen Richtung die Reibungskraft des sich verlagernden Axialführungsabschnitt durch eine gradlinige Abrollbewegung des Axialführungsrads an der Innenwandung des Rohrabschnitts minimiert werden. In einer radialen Richtung kann durch die Anordnung der Rotationsachse des Axialführungsrads ein Rotieren des Axialführungsabschnitts durch die auftretenden Reibungskräfte bei einer Verlagerung entgegen der Rotationsachse des Axialführungsrads vermieden werden.

Vorteilhaftweise ist erfindungsgemäß optional vorgesehen, dass das mindestens eine Antriebsrad und oder das mindestens eine Axialführungsrads bei einem bestimmungsgemäßen Benutzen der Antriebseinheit federbelastet an der Innenwandung des Rohrabschnitts anliegt. Durch die Federbelastung des Antriebsrads und oder des Führungsrads kann erreicht werden, dass das Antriebsrad und oder das Führungsrads zu jedem Zeitpunkt der Verlagerung der Antriebseinheit an der Innenwandung des Rohrabschnitts anliegt und an diesem entlanggeführt wird. Weiterhin kann durch die Federbelastung die Antriebseinheit bei einem geraden Verlauf des Rohrabschnitt in dem Rohrabschnitt zentriert werden, wobei auch etwaige Veränderungen des Durchmessers des Rohabschnitts durch beispielsweise an der Innenwandung anhaftenden Ablagerungen ausgeglichen werden können. Weiterhin ist durch die Federbelastung ein durchfahren selbst von Rohrabschnitten mit einer Krümmung möglich, wobei durch die Federbelastung zu jedem Zeitpunkt alle Antriebsräder und Axialführungsräder an der Innenwandung anliegen und somit eine genaue Regulierung der Geschwindigkeit der Antriebseinheit ermöglicht werden kann.

Einer vorteilhaften Ausgestaltung des Erfindungsgedankens zur Folge ist vorgesehen, dass die Antriebseinheit einen zweiten entlang der Umfangsrichtung rotierbaren Rotationsabschnitt aufweist, wobei der zweite Rotationsabschnitts einem der ersten Rotationsabschnitt gegenläufige Rotationsrichtung aufweist, sodass sich das Drehmoment des ersten Rotationsabschnitts und das Drehmoment des zweiten Rotationsabschnitts kompensieren. Der erste und der zweite Rotationsabschnitt können dabei in einer axialen Richtung hintereinander angeordnet sein oder durch den Axialführungsabschnitt in einer axialen Richtung voneinander getrennt sein. Der erste und der zweite Rotationsabschnitt sind dabei so ausgestaltet, dass sich bei einer Drehung der beiden Rotationsabschnitte entstehenden Drehmomente kompensieren, sodass sich die Antriebseinheit möglichst vibrationsarm durch den Rohrabschnitt bewegen kann. Dabei kann nur einer den beiden Rotationsabschnitte angetrieben sein, wobei der zweite Rotationsabschnitt allein durch die Rotation des ersten Rotationsabschnitts sowie die an dem zweiten Rotationsabschnitt festgelegten Antriebsräder rotiert.

Es ist auch möglich und erfindungsgemäß optional vorgesehen, dass die Antriebseinheit einen Elektromotor aufweist, wobei die Rotation des ersten und gegebenenfalls des zweiten Rotationsabschnitts über den Elektromotor antreibbar ist. Der Elektromotor ist vorzugsweise in einem Innenraum des Gehäuses der Antriebseinheit angeordnet und damit möglichst hermetisch von dem in dem Rohrabschnitt fließenden Medium abgeschottet, um einer Schädigung des Elektromotors vorzubeugen. Über beispielsweise eine mechanische oder eine magnetische Weiterleitung kann das Drehmoment des Elektromotors auf den ersten und/oder zweiten Rotationsabschnitt übertragen werden. Darüber hinaus ist es auch denkbar, dass jeder Rotationsabschnitt einen separaten Elektromotor aufweist, wobei der jeweils zugeordnete Rotationsabschnitt über den jeweiligen Elektromotor angetrieben werden kann.

Es ist auch möglich, dass die Antriebseinheit eine Energiespeichereinrichtung aufweist, wobei der Elektromotor mit Hilfe der Energiespeichereinrichtung mit Energie versorgbar ist. Die Energiespeichereinrichtung ist vorzugsweise wie der Elektromotor selbst innerhalb des Innenraums des Gehäuses der Antriebseinheit angeordnet. Durch die Verwendung einer Energiespeichereinrichtung kann die Antriebseinheit betrieben werden, wobei auf eine externe Stromversorgung beispielsweise über ein Kabel oder einen Netzanschluss verzichtet werden kann. Die Energiespeichereinrichtung kann als Batterie oder Akkumulator ausgestaltet sein, wobei die Batterie oder der Akkumulator für einen minuten- oder stundenlangen Betrieb der Antriebseinheit ausgelegt ist, wodurch die Antriebseinheit möglichst autark betrieben werden kann. Die Energiespeichereinrichtung kann auswechselbar innerhalb des Innenraums angeordnet sein, wodurch bei einem geringen Ladestand der Energiespeichereinrichtung ein Austauschen ermöglicht wird. Vorzugsweise ist die Energiespeichereinrichtung jedoch so ausgestaltet, dass ein induktiver Ladevorgang erreicht werden kann, wodurch der Innenraum des Gehäuses bei dem Aufladen nicht geöffnet werden muss und somit keine Fremdkörper oder flüssige sowie gasförmige Medien in den Innenraum gelangen können.

Des Weiteren ist es möglich und erfindungsgemäß optional vorgesehen, dass die Antriebseinheit eine Reinigungsvorrichtung aufweist, wobei die Reinigungsvorrichtung dazu eingerichtet ist, die Innenwandung des Rohrabschnitts bei einer Verlagerung der Antriebseinheit in dem Rohrabschnitt zu reinigen. Die Reinigungsvorrichtung kann dabei an dem Gehäuse der Antriebseinheit angeordnet sein, wobei bei einer Verlagerung der Antriebseinheit in axialer Richtung in dem Rohrabschnitt die Reinigungsvorrichtung mit der Innenwandung des Rohrabschnitts in Kontakt kommt, an dieser entlanggeführt wird, und diese mechanisch reinigt. Weiterhin kann die Reinigungsvorrichtung an einer separaten Vorrichtung an dem Gehäuse der Antriebseinheit angeordnet sein. Die Reinigungsvorrichtung kann beispielsweise federbelastet gegen die Innenwandung des Rohrabschnitts gedrückt werden, um auch beim Durchfahren einer Krümmung des Rohrabschnitts einen Kontakt der Reinigungsvorrichtung mit der Innenwandung des Rohrabschnitts zu ermöglichen.

Gemäß einer vorteilhaften Umsetzung ist vorgesehen, dass die Reinigungsvorrichtung in Umfangsrichtung mindestens abschnittsweise sich über einen Umfang erstreckt und an dem Gehäuse angeordnet ist. Die Reinigungsvorrichtung kann dabei in Umfangsrichtung das Gehäuse umgebend oder umklammernd angebracht sein. Weiterhin kann die Reinigungsvorrichtung als einzelne in Umfangsrichtung beabstandet zueinander angeordnete Streifen oder Flächenelemente ausgebildet sein, welche äquidistant oder mit unterschiedlichem Abstand zueinander angeordnet sind.

Des Weiteren ist es möglich und optional vorgesehen, dass die Reinigungsvorrichtung an dem Rotationsabschnitt angeordnet ist. Durch die Anordnung der Reinigungsvorrichtung an dem Gehäuse im Bereich des Rotationsabschnitts rotiert die Reinigungsvorrichtung bei einer Rotation des Rotationsabschnitts ebenfalls um die Rotationsachse. Dabei kann die Reinigungsvorrichtung besonders effektiv an der Innenwandung des Rohrabschnitts entlanggeführt werden und die dort gegebenenfalls festsetzenden Ablagerungen abtragen. Weiterhin kann die Reinigungsvorrichtung an einer separaten um die Rotationsachse des Rotationsabschnitts drehbar gelagerten Halterung angeordnet sein, wodurch beispielsweise eine zusätzliche Rotation orthogonal zu der Rotationsachse des Rotationsabschnitts ermöglicht werden kann.

Vorteilhafterweise ist erfindungsgemäß optional vorgesehen, dass eine Rotation der Reinigungsvorrichtung mit Hilfe des Elektromotors antreibbar ist. Für den Antrieb der Rotation der Reinigungsvorrichtung kann derselbe Elektromotor Verwendung finden, welcher auch für die Rotation des Rotationsabschnitts verwendet wird. Weiterhin kann die Reinigungsvorrichtung einen separaten Elektromotor für den Antrieb der Rotation aufweisen.

In einer vorteilhaften Ausgestaltung der Erfindung ist ebenfalls vorgesehen, dass die Antriebseinheit eine zweite Reinigungsvorrichtung aufweist, wobei die zweite Reinigungsvorrichtung eine der ersten Reinigungsvorrichtung gegenläufige Drehrichtung aufweist, sodass sich das Drehmoment der ersten Reinigungsvorrichtung und das Drehmoment der zweiten Reinigungsvorrichtung kompensieren. Bei der Verwendung einer ersten und einer zweiten

Reinigungsvorrichtung kann es vorteilhaft sein, dass die erste Reinigungsvorrichtung eine der zweiten Reinigungsvorrichtung gegenläufige Drehrichtung aufweist, um die entstehenden Drehmomente kompensieren zu können. Dadurch kann erreicht werden, dass die Antriebseinheit möglichst geringen Vibrationen ausgesetzt ist, und damit die auf die Antriebseinheit und/oder auf den Rohrabschnitt einwirkenden Kräfte reduziert werden können um eventuellen durch die Kräfte ausgelösten Beschädigungen vorzubeugen.

Vorzugsweise ist vorgesehen, dass die Reinigungsvorrichtung eine Bürste mit radial nach außen abstehenden Borsten aufweist. Die Bürste ist dazu eingerichtet bei einer Verlagerung der Antriebseinheit in einer axialen Richtung in dem Rohrabschnitt an der Innenwandung des Rohrabschnitts entlanggeführt zu werden, wobei die Borsten der Bürste etwaige Ablagerungen an der Innenwandung des Rohrabschnitts mechanisch abtragen können. Weiterhin kann die Reinigungsvorrichtung als an der Innenwandung des Rohrabschnitts anliegende Messer oder Krallen realisiert sein, welche insbesondere bei stark anhaftenden Ablagerungen vorteilhaft sein können. Die Reinigungsvorrichtung kann auch als eine an dem Gehäuse angeordnete und sich in einer axialen Richtung erstreckende Spirale ausgestaltet sein, welche zusätzlich einen Antrieb durch den Elektromotor erfahren kann und somit rotierbar an dem Gehäuse festgelegt ist. Darüber hinaus kann die Reinigungsvorrichtung als ein poröser Schwamm ausgestaltet sein, welcher es ermöglicht, die Innenwandung des Rohrabschnitts nach dem Reinigen zu trocknen und/oder in dem Rohrabschnitt verbleibende Flüssigkeiten oder Gase aufzunehmen oder zu adsorbieren. Dies kann besonders dann sinnvoll sein, wenn die Reinigung des Rohrabschnitts vor einem Wechsel des in dem Rohrabschnitt transportieren Mediums durchgeführt wird, um eine Verunreinigung des neuen in dem Rohrabschnitt zu transportierendem Medium zu verhindern.

Eine denkbare Ausgestaltungsmöglichkeit umfasst ebenfalls eine Ausführungsvariante mit einer Desinfektionseinrichtung, wobei die Desinfektionseinrichtung dazu eingerichtet ist, die Innenwandung des Rohrabschnitts zu desinfizieren. Die Desinfektionseinrichtung kann während eines Verlagerns der Antriebseinrichtung einen auf die Innenwandung des Rohrabschnitts gerichtete Desinfektionsdüse aufweisen, wobei die Desinfektionsdüse dazu eingerichtet ist ein desinfizierendes Fluid auf die Innenwandung des Rohrabschnitts zu sprühen. Durch die zusätzliche mechanische Reinigung des besprühten Innenabschnitts des Rohres kann eine effektive und nachhaltige Reinigung der Innenwandung ermöglicht werden. Dies ermöglicht insbesondere bei biologischen und/oder lebensmitteltechnischen Rohranlagen eine effektive und gründliche Reinigung. Neben einem Desinfektionsmittel kann die Desinfektionsreinrichtung auch dazu eingesetzt werden, schmutzlösende, korrodierende, biozide, fungizide, oder mit einem Scheuermittel versetzte Flüssigkeiten auf die Innenwandung des Rohrabschnitts aufzutragen. Weiterhin kann die Desinfektionseinrichtung eine UV-Licht emittierende Lichtquelle aufweisen, welche dazu eingerichtet sein kann, in dem Rohrabschnitt befindliche Mikroorganismen abzutöten.

Es ist auch möglich und erfindungsgemäß optional vorgesehen, dass eine Übertragung eines Drehmoments von einem Elektromotor zu der Antriebseinheit oder von dem Elektromotor zu der Reinigungsvorrichtung über eine Magnetvorrichtung übertragbar ist. Auf diese Weise kann der Antrieb der Antriebseinheit vollständig abgetrennt werden, wodurch ein Eindringen von einem flüssigen oder gasförmigen Medium in den Antrieb verhindert werden kann. Beispielsweise kann der Rotationabschnitt eine geeignete Magnetvorrichtung aufweisen, welche dazu eingerichtet ist mit einem Rotor des Elektromotors in Wirkverbindung zu stehen und das sich wechselnde magnetische Feld in eine Rotation des Rotationsabschnitts umzuwandeln. Neben der Verwendung eines Elektromotors kann auch ein Schrittmotor eingesetzt werden, wobei durch die Änderung der Polarisierung seiner in dem Innenraum angeordneter Spulen ein Drehmoment mit Hilfe der Magnetvorrichtung auf die Antriebseinheit und/oder die Reinigungsvorrichtung erreicht werden kann. In einer alternativen Ausgestaltung kann die Antriebseinheit für einen Molch über von außen an dem Rohrabschnitt angelegte polarisierbare Spulen in Rotation versetzt werden, wobei die Magnetvorrichtung durch Permanentmagnete gebildet ist.

Durch eine derartige Ausgestaltung der Erfindung wird es ermöglicht, dass die Antriebseinheit eine Verbindungseinrichtung aufweist, wobei die Antriebseinheit über die Verbindungseinrichtung mit einem Molch verbindbar ist. Die Verbindungseinrichtung kann an einer und/oder an beiden Stirnseiten der Antriebseinheit angeordnet sein, wobei die Antriebseinheit über die Verbindungseinrichtung mit einer weiteren Antriebseinheit und oder einem Molch verbindbar ist. Hierzu kann die Verbindungseinrichtung ein Verbindungselement aufweisen, wobei das Verbindungselement in Form eines an der Stirnseite in einem Winkel hervorspringender Fortsatz mit einer den Fortsatz durchdringenden Ausnehmung ausgestaltet sein kann. An der Ausnehmung kann beispielsweise über einen Haken oder mit ein mit einem Stift oder Bolzen an der Ausnehmung gesicherte weitere Antriebseinheit oder ein Molch befestigt werden. Der weitere Molch und oder die Antriebseinheit kann weiterhin selbst ein Verbindungselement aufweisen wobei ein weiterer Molch angehängt werden kann. Auf diese Weise kann eine Kette aus mehreren miteinander verbundenen Molchen und oder Antriebseinheiten erstellt werden. Hierbei kann jeder Molch verschieden aufgebaut sein und verschiedene Funktionen beinhalten. Beispielsweise kann ein Molch eine Reinigungsvorrichtung aufweisen, während der zweite Molch eine Desinfektionseinrichtung aufweist.

Vorteilhafterweise ist erfindungsgemäß vorgesehen, dass die Verbindungseinrichtung eine Gelenkvorrichtung aufweist. Unter einer Gelenkverbindung wird eine Verbindung verstanden, die es ermöglicht, dass die beiden verbundenen Teile entlang mindestens eines Freiheitsgrads relativ zueinander verschwenkt werden können. Auf diese Weise kann es ermöglicht werden, dass die Antriebseinheit mit einem oder mehreren Molchen und/oder weiteren Antriebseinheiten selbst Rohrabschnitte durchfahren kann, welche eine starke Krümmung aufweisen. Dabei kann die Gelenkverbindung als Drehgelenk oder als Kugelgelenk ausgestaltet sein

Bei einer derartigen Ausgestaltung der Erfindung kann die Gelenkvorrichtung eine Kardanwelle sein, wobei mit Hilfe der Kardanwelle das Drehmoment des Elektromotors von der Antriebseinheit auf den Molch und/oder eine weitere Antriebseinheit übertragbar sind. Eine Ausgestaltung als Kardanwelle bietet den Vorteil, dass die beiden Elemente verschwenkbar zueinander gelagert werden können und weiterhin Drehmomente von einem auf das andere Element übertragbar sind. Auf diese Weise kann ein Drehmoment des Elektromotors, welcher in der Antriebseinheit angeordnet ist auf weitere Molche übertragen werden, wobei dort beispielsweise angebrachte Reinigungsvorrichtungen und oder Desinfektionsvorrichtungen betrieben werden können. Daher können die einzelnen Molche einfach und kostengünstig realisiert werden, da es die Übertragung des Drehmoments ermöglicht, dass die Molche selbst keinen Elektromotor, keine Steuerung, sowie anderweitige Elemente zum Betrieb des Elektromotors notwendigen Voraussetzungen erfüllen müssen.

Auch möglich und erfindungsgemäß optional vorgesehen ist, dass die Antriebseinheit mindestens ein Dichtungselement aufweist, wobei das Gehäuse der Antriebseinheit mit Hilfe des mindestens einen Dichtungselements fluiddicht an der Innenwandung des Rohrabschnitts anliegt und einen Fluidstrom entlang des Rohrabschnitts von einer ersten Seite des Antriebselements zu einer zweiten Seite des Antriebselements verhindert. Insbesondere bei der Verwendung einer Kette aus einer Antriebseinheit und mehreren Molchen können die Antriebseinheit und der letzte Molch der Kette an einem von der Antriebseinheit entfernten Ende der Kette jeweils ein Dichtungselement aufweisen, welches fluiddicht an dem Molch beziehungsweise der Antriebseinheit und der Innenwandung des Rohrabschnitts anliegt. Auf diese Weise kann ein von den Dichtungselementen begrenzter Zwischenraum erschaffen werden, in welchem beispielsweise Desinfektions- oder Reinigungsflüssigkeiten verwendet werden, ohne dass die Flüssigkeiten sich frei in dem Rohrabschnitt bewegen können und eventuell nach dem Reinigen an der Innenwandung des Rohrabschnitts anhaften bleiben.

Einer vorteilhaften Ausgestaltung zur Folge ist vorgesehen, dass die Antriebseinheit eine Sensoreinrichtung aufweist, wobei die Sensoreinrichtung dazu eingerichtet ist, die auf den Molch und oder auf den Rohrabschnitt einwirkenden Kräfte zu erfassen. Die Sensoreinrichtung kann beispielsweise dafür eingesetzt werden, dass die von der Antriebseinheit zurückgelegte Strecke in dem Rohrabschnitt erfasst und aufgezeichnet wird, sodass bei nicht transparenten Rohren oder Rohrsystemen eine Lokalisierung der Antriebseinheit zu jedem Zeitpunkt möglich ist. Weiterhin kann die Sensoreinrichtung dazu verwendet werden beispielsweise den Durchmesser des Rohrabschnitts zu erfassen, um so etwaige Beschädigungen wie beispielsweise Risse frühzeitig erfassen zu können.

Durch eine derartige Ausgestaltung der Erfindung, wird es ermöglicht, dass die Antriebseinheit eine Bildverarbeitungsvorrichtung zur Aufnahme von Bildern der Innenwandung des Rohrabschnitts aufweist. Auf diese Weise können eine bildliche Beurteilung und eine Begutachtung der Beschädigungen sowie des Zustands des Rohrabschnitts ermöglicht werden. Die Bildbearbeitungsvorrichtung kann beispielsweise als eine einfache CCD-Kamera realisiert werden.

Vorzugsweise ist ebenfalls vorgesehen, dass die Antriebseinheit eine Kommunikationseinrichtung zur Kommunikation des Molchs mit einer externen Vorrichtung aufweist. Die Kommunikationsvorrichtung kann dazu eingerichtet sein die von der Sensoreinrichtung erfassten Daten und Messwerte an eine externe Vorrichtung außerhalb des Rohrabschnitts zu übertragen. Zu diesem Zweck kann die Kommunikationsvorrichtung eine Funkeinrichtung beziehungsweise eine Übertragung per WLAN oder Bluetooth ermöglichen. Neben der Übertragung der Sensordaten kann die Kommunikationseinrichtung ebenfalls dafür verwendet werden Bilder beziehungsweise das Bildmaterial der mit der Bildverarbeitungsvorrichtung aufgenommenen Bildern an eine externe Vorrichtung zu ermöglichen.

Weitere vorteilhafte Ausgestaltungen der Antriebseinheit für einen Molch werden anhand von in der Zeichnung dargestellten Ausführungsbeispielen erläutert. Es zeigt:
Figur 1 eine erfindungsgemäße Antriebseinheit für einen Molch mit einem Rotationsabschnitt und einem Axialführungsabschnitt,
Figur 2 eine schematische Darstellung einer Lagereinrichtung mit mehreren Lagerungsarmen,
Figur 3 eine schematische Ansicht der Vergrößerung III aus Figur 2,
Figur 4 eine schematische Darstellung einer Antriebseinheit, welche über ein Verbindungselement mit einer Mehrzweckeinrichtung und einem Molch verbunden ist,
Figur 5 eine schematische Schnittansicht durch einen Rohrabschnitt mit drei miteinanderverbundenen Antriebseinheiten, und
Figur 6 eine schematische Schnittzeichnung durch ein Antriebselement mit einem Elektromotor und einer Magnetvorrichtung.

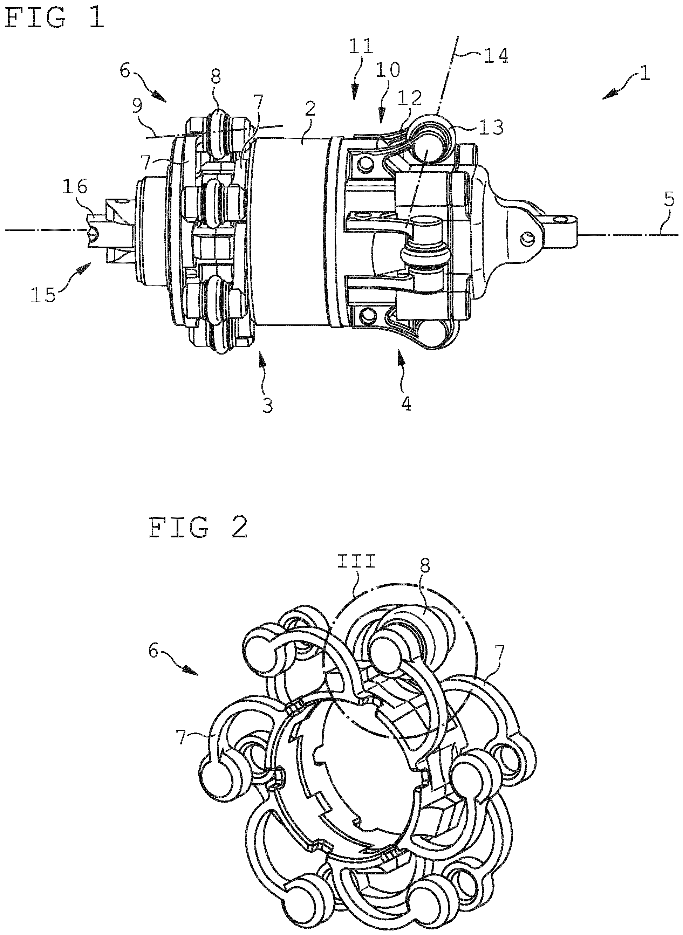

In Figur 1 ist eine erfindungsgemäße Antriebseinheit 1 für einen Molch in einer Seitenansicht dargestellt. Die Antriebseinheit 1 weist ein nahezu zylinderförmiges Gehäuse 2 mit einem in einer axialen Richtung nacheinander angeordneten Rotationsabschnitt 3 und einen Axialführungsabschnitt 4 auf. Der Rotationsabschnitt 3 des Gehäuses 2 ist dabei so ausgestaltet, dass der Rotationsabschnitt 3 des Gehäuses 2 relativ zu dem Axialführungsabschnitt 4 um eine Rotationsachse 5 rotieren kann. Dabei fallen die Rotationsachse 5 und die axiale Richtung aufeinander. bei einer bestimmungsgemäßen Benutzung der Antriebseinheit 1, das heißt bei einer Anordnung der Antriebseinheit 1 in einem Rohrabschnitt fällt die axiale Richtung der Antriebseinheit 1 und die axiale Richtung des Rohrabschnitts aufeinander. Bei einer Rotation des Rotationsabschnitts 3 kann die Antriebseinheit 1 entlang der axialen Richtung des Rohrabschnitts verlagert werden.

Der Rotationsabschnitt 3 weist eine an dem Rotationsabschnitt 3 angeordnete und das Gehäuse 2 im Bereich des Rotationsabschnitts 3 umgreifende Lagereinrichtung 6 auf. Die Lagereinrichtung 6 wiederum weist mehrere radial über das Gehäuse 2 abstehende Lagerarme 7 auf, wobei die Lagerarme 7 in Umfangsrichtung äquidistant zueinander angeordnet sind. Jeweils zwei Lagerarme 7 der Lagereinrichtung 6 lagern dabei ein Antriebsrad 8. Jedes Antriebsrad 8 ist dabei so angeordnet und gelagert, dass es zum einen um eine Rotationsachse 9 des Antriebsrads 8 rotierbar an den Lagerarmen 7 angeordnet ist und dass die Rotationsachse 9 jedes Antriebsrads 8 in einem spitzen Winkel zu der Rotationsachse 5 des Rotationsabschnitts 3 angeordnet ist. Die Lagereinrichtung 6 beziehungsweise die Lagerarme 7 sind dabei flexibel ausgestaltet, sodass die Antriebsräder 8 insbesondere bei einem Durchfahren eines gekrümmten Rohrabschnitts 22 in radialer Richtung einfedern können und damit die Abrollbewegung der einzelnen Antriebsräder 8 unterschiedlich ablaufen kann, um einen unerwünschten Schlupf bei der Abrollbewegung mehrerer Antriebsräder 8 zu vermeiden. Durch das Einfedern wird der spitze Winkel, welcher auch als Lenkwinkel bezeichnet werden kann vergrößert, wodurch die Antriebseinheit 1 in vorteilhafterweise gekrümmte Rohrabschnitte 22 durchfahren kann.

Der Axialführungsabschnitt 4 weist eine Axialführungseinrichtung 10 mit mehreren Axialführungselementen 11 auf, wobei die Axialführungselemente 11 äquidistant zueinander entlang der Umfangsrichtung des Gehäuses 2 angeordnet sind. An jeweils zwei radial nach außen über das Gehäuse 2 abstehenden Axialführungsradarmen 12 ist ein rotierbar gelagertes Axialführungsrad 13 gelagert. Die Rotationsachse 14 der Axialführungsräder 13 ist dabei orthogonal zu der Rotationsachse 5 des Rotationsabschnitts 3 angeordnet. Bei einer bestimmungsgemäßen Benutzung der Antriebseinheit 1 liegen die Antriebsräder 8 und die Axialführungsräder 13 an der Innenwandung des Rohrabschnitts an, wobei die Räder 8, 13 die einzigen Berührungspunkte der Antriebseinheit 1 mit der Innenwandung darstellen. Die Antriebsräder 8 sowie die Axialführungsräder 13 sind dabei federbelastet ausgebildet, sodass die Antriebsräder 8 sowie die Axialführungsräder 13 gegen die Innenwandung des Rohrabschnitts gepresst werden.

Bei einer Rotation des Rotationsabschnitts 3 werden die Antriebsräder 8 entlang einer schraubenförmigen Abrollbahn an der Innenwandung des Rohrabschnitts entlanggeführt. Dem bei der Rotation des Rotationsabschnitts 3 erzeugte Rotationsdrehmoment wird ein dem Rotationsdrehmoment entgegengesetztes Führungsdrehmoment des Axialführungsabschnitts 4 entgegengesetzt. Der Axialführungsabschnitt verbleibt durch die Anordnung der Rotationsachse 14 der Radialführungsräder 13 orthogonal zu der Rotationsachse 5 des Rotationsabschnitts 3 rotationsfest in dem Rohrabschnitt, während die Antriebseinheit 1 in der axialen Richtung durch die Rotation des Rotationsabschnitts 3 angetrieben und innerhalb des Rohrabschnitts verlagert wird.

An den jeweiligen Stirnseiten des zylinderförmigen Gehäuses 2 der Antriebseinheit 1 ist jeweils eine Verbindungseinrichtung 15 angeordnet, wobei die Antriebseinheit 1 über die Verbindungseinrichtung 15 mit einer weiteren Antriebseinheit 1 oder einem Molch verbunden werden kann. Hierbei weist die Verbindungseinrichtung 15 ein von der Stirnseite in einem Winkel vorspringendes Verbindungselement 16 mit einer durchgehenden Ausnehmung auf.

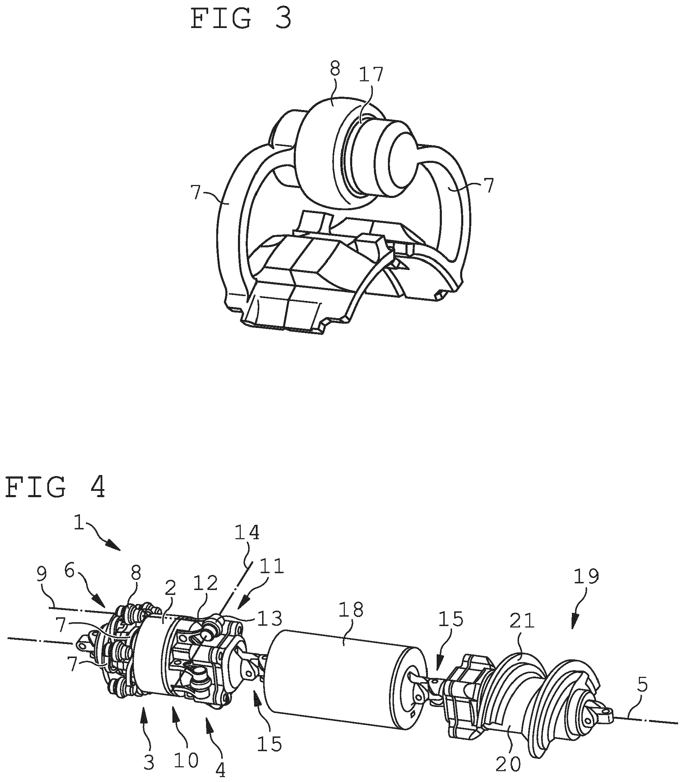

In Figur 2 ist eine schematische Ansicht der Lagereinrichtung 6 gezeigt, wobei für eine übersichtliche Darstellung lediglich ein Antriebsrad 8 der Lagereinrichtung 6 dargestellt ist. Die Lagereinrichtung 6 ist als ein das Gehäuse 2 der Antriebseinrichtung 1 umgreifender und an dem Gehäuse 2 festgelegter Ring ausgebildet. Die Lagereinrichtung 6 weist in Umfangsrichtung zwei Reihen von in der radialen Richtung von nach außen über das Gehäuse 2 hervorstehenden und beabstandet zueinander angeordneten Lagerarmen 7 auf. Die Lagerarme 7 sind entlang der Umfangsrichtung gekrümmt und weisen innerhalb einer Reihe dieselbe Krümmungsrichtung auf, wobei die Krümmungsrichtung der zweiten Reihe der Lagerarme 7 eine der ersten Reihe entgegengesetzte Krümmungsrichtung aufweist. Jeweils zwei in Ihrer Krümmungsrichtung entgegengesetzt ausgebildete Lagerarme 7 lagern dabei ein Antriebsrad 8, wobei Sie einen in Umfangsrichtung ausgebildeten Bogen aufspannen und jeweils ein Lagerarm 7 an einer Seite einer Antriebsradnabe 17 des Antriebsrades 8 festgelegt ist. Eine Vergrößerung des Bereichs III der Lagerung des Antriebsrads 8 aus Figur 2 ist in Figur 3 dargestellt.

In Figur 4 ist eine Antriebseinheit 1 eines Molchs mit einem Rotationsabschnitt 3 und einem Axialführungsabschnitt 4 dargestellt. An einer dem Axialführungsabschnitt 4 zugewandten Stirnseite der Antriebseinheit 1 ist die Antriebeinheit 1 mit Hilfe der Verbindungseinrichtung 15 mit einer Mehrzweckeinrichtung 18 mit einem zylinderförmigen Gehäuse verbunden. Die Mehrzweckeinrichtung 18 kann dabei eine Energiespeichereinrichtung, eine Kommunikationseinrichtung sowie weitere Sensoreinrichtungen aufweisen, welche in dem Innenraum der weiteren Einrichtung anordenbar sind. An einer der Antriebseinheit 1 abgewandten Seite der Mehrzweckeinrichtung 18 ist über eine weitere an der Mehrzweckeinrichtung 18 angeordnete Verbindungseinrichtung 15 ein Molch 19 angeordnet. Der Molch 19 weist eine nahezu zylinderförmige Formgebung eines Molchgehäuses 20 auf, wobei an dem Molchgehäuse 20 eine schraubenförmige Reinigungsvorrichtung 21 angeordnet ist. Bei einer Verlagerung der Antriebseinheit 1 in dem Rohrabschnitt wird die Reinigungsvorrichtung an der Innenwandung des Rohrabschnitts entlanggeführt und dabei an der Innenwandung des Rohrabschnitts anhaftende Ablagerung mechanisch entfernt. Die Verbindungseinrichtung 15 ist in dem vorliegenden Beispiel als eine kardanische Verbindung ausgeführt, wobei eine Rotationsbewegung über die kardanische Verbindung von der Antriebseinheit 1 auf einen Molch 19 oder von einem Molch 19 auf einen weiteren (in der Abbildung nicht dargestellten) Molch 19 übertragen werden kann.

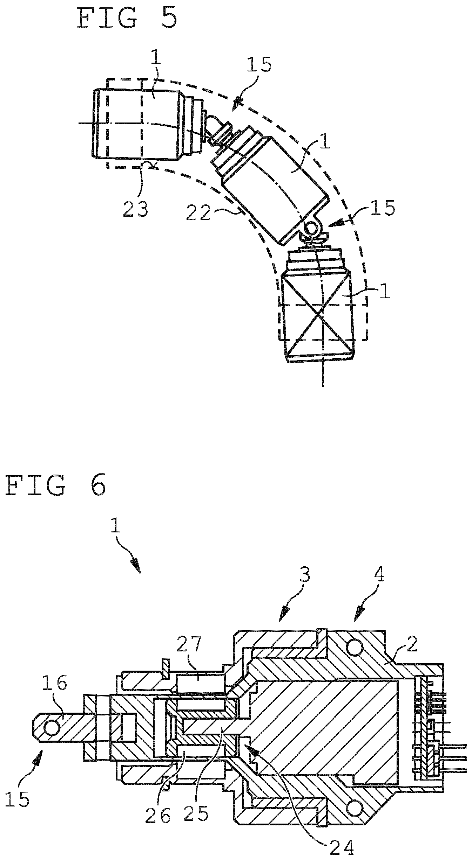

In Figur 5 ist eine schematische Schnittansicht durch einen Rohrabschnitt 22 mit drei miteinander eine kardanische Verbindung verbundenen und in dem gekrümmten Rohrabschnitt 22 angeordneten Antriebseinheiten 1 dargestellt. Die Antriebseinheiten 1 sind dabei an die Formgebung des Rohrabschnitts 22 angepasst und liegen mit den nicht näher in der Figur dargestellten Antriebsrädern 8 und Axialführungsrädern 13 an einer Innenwandung 23 des Rohrabschnitts 22 an.

In Figur 6 ist eine schematische Schnittansicht durch eine erfindungsgemäße Ausgestaltung einer Antriebseinheit 1 dargestellt. Die Antriebseinheit 1 weist ein nahezu zylinderförmiges Gehäuse 2 mit einer Rotationsabschnitt 3 und einem Axialführungsabschnitt 4 auf. An einer dem Rotationsabschnitt 3 zugewandten Stirnseite ist an dem Gehäuse 2 eine Verbindungseinrichtung 15 mit einem Verbindungselement 16 festgelegt zur Verbindung der Antriebseinheit 1 mit einer weiteren Antriebseinheit 1 oder mit einem Molch 19. In einem von dem Gehäuse 2 umgebenden Innenraum ist ein Elektromotor 24 mit einem stiftförmigen Stator 25 und einen den Stator 25 umgebenden Läufer 26 angeordnet. An dem Rotationsabschnitt 3 des Gehäuses 2 der Antriebseinheit 1 ist eine in einem Bereich des Läufers 26 befindliche Magnetvorrichtung 27 angeordnet. Die Magnetvorrichtung 27 ist dazu eingerichtet, den Rotationsabschnitt durch eine magnetische Wechselwirkung des Läufers 26 und der Magnetvorrichtung 27 zu rotieren.

In den Darstellungen der Figuren 1 bis 6 sind lediglich jeweils einzelne mehrerer gleichartiger Elemente exemplarisch mit einem Bezugszeichen gekennzeichnet.

### BEZUGSZEICHENLISTE

- 1: Antriebseinheit
- 2: Gehäuse
- 3: Rotationsabschnitt
- 4: Axialführungsabschnitt
- 5: Rotationsachse des Rotationsabschnitts
- 6: Lagereinrichtung
- 7: Lagerarm
- 8: Antriebsrad
- 9: Rotationsachse des Antriebsrads
- 10: Axialführungsabschnitt
- 11: Axialführungselemente
- 12: Axialführungsradarmen
- 13: Axialführungsrad
- 14: Rotationsachse des Radialführungsrads
- 15: Verbindungseinrichtung
- 16: Verbindungselement
- 17: Antriebsradnabe
- 18: Mehrzweckeinrichtung
- 19: Molch
- 20: Molchgehäuse
- 21: Reinigungsvorrichtung
- 22: Rohrabschnitt
- 23: Innenwandung des Rohrabschnitts
- 24: Elektromotor
- 25: Stator
- 26: Läufer
- 27: Magnetvorrichtung

## Patentansprüche

1. Antriebseinheit (1) für einen Molch (19) zum Antrieb des Molchs (19) in einem Rohrabschnitt (22), wobei die Antriebseinheit (1) ein Gehäuse (2) und mindestens eine an dem Gehäuse (2) gelagerte Antriebseinrichtung aufweist, durch welche die Antriebseinheit (1) bei einer bestimmungsgemäßen Benutzung in dem Rohrabschnitt (22) verlagert wird, **dadurch gekennzeichnet, dass** die Antriebseinheit (1) einen die Antriebseinrichtung aufweisenden Rotationsabschnitt (3) und einen Axialführungsabschnitt (4) aufweist, die in einer axialen Richtung hintereinander angeordnet sind, wobei der Rotationsabschnitt (3) relativ zu dem Axialführungsabschnitt (4) um eine Rotationsachse (5) rotieren kann und die Rotationsachse (5) parallel zu der axialen Richtung verläuft, und wobei der Rotationsabschnitt (3) mindestens ein in einer radialen Richtung senkrecht zur Rotationsachse (5) nach außen über das Gehäuse (2) vorspringendes Antriebsrad (8) aufweist, dessen Ausrichtung durch eine Ausrichtung einer Rotationsachse (9) des Antriebsrads (8) vorgegeben ist, wobei eine Projektion der Rotationsachse (9) des mindestens einen Antriebsrads (8) auf eine Projektionsebene, in welcher die Rotationsachse (5) des Rotationsabschnitts (3) verläuft, die Rotationsachse (5) des Rotationsabschnitts (3) in einem spitzen Winkel schneidet, und wobei der Axialführungsabschnitt (4) eine Axialführungseinrichtung (10) aufweist, wobei bei einer bestimmungsgemäßen Benutzung des Axialführungsabschnitt (4) durch eine Wirkverbindung der Axialführungseinrichtung (10) mit einer Innenwandung (23) des Rohrabschnitts (22) eine einem Rotationsdrehmoment des rotierenden Rotationsabschnitts (3) entgegengesetztes Führungsdrehmoment erzeugt wird, sodass der Axialführungsabschnitt (4) bei einer Rotation des Rotationsabschnitts (3) in Umfangsrichtung rotationsfest in dem Rohrabschnitt (22) in der axialen Richtung verlagerbar ist, wobei bei einer bestimmungsgemäßen Benutzung der Antriebseinheit (1) in dem Rohrabschnitt (22) das mindestens eine Antriebsrad (8) des Rotationsabschnitts (3) bei einer Rotation des Rotationsabschnitts (3) an der Innenwandung (23) des Rohrabschnitts (22) entlang einer schraubenförmigen Abrollbahn abrollt, sodass die Antriebseinheit (1) bei einer Rotation des Rotationsabschnitts (3) in dem Rohrabschnitt (22) entlang der axialen Richtung der schraubenförmigen Abrollbahn angetrieben und verlagert wird.

2. Antriebseinheit (1) für einen Molch (19) nach Anspruch 1, **dadurch gekennzeichnet, dass** der Rotationsabschnitt (3) eine Lagereinrichtung (6) aufweist, wobei das mindestens eine Antriebsrad (8) an der Lagereinrichtung (6) gelagert ist.

3. Antriebseinheit (1) für einen Molch (19) nach Anspruch 2, **dadurch gekennzeichnet, dass** die Lagereinrichtung (6) mindestens einen gekrümmten und in der radialen Richtung abstehenden Lagerarm (7) mit mindestens einem nicht radial nach außen verlaufenden Bereich aufweist.

4. Antriebseinheit (1) für einen Molch (19) nach einem der Ansprüche 1 bis 3, **dadurch gekennzeichnet, dass** das mindestens eine Antriebsrad (8) an zwei Lagerarmen (7) gelagert ist, wobei jeweils ein Lagerarm (7) an einer Seite einer Antriebsradnabe (17) des mindestens einen Antriebsrads (8) festgelegt ist.

5. Antriebseinheit (1) für einen Molch (19) nach einem der vorangegangenen Ansprüche, **dadurch gekennzeichnet, dass** der oder die Lagerarme (7) der die Lagereinrichtung (6) elastisch verformbar ausgestaltet sind, wobei das mindestens eine Antriebsrad (8) über eine elastische Verformung des Lagerarms (7) in einer radialen Richtung verlagerbar ist, sodass ein Abstand zwischen dem mindestens einen Antriebsrad (8) und dem Gehäuse (2) veränderbar ist.

6. Antriebseinheit (1) für einen Molch (19) nach Anspruch 5, **dadurch gekennzeichnet, dass** der spitze Winkel bei der elastischen Verformung des Lagerarms (7) vergrößert oder verkleinert wird.

7. Antriebseinheit (1) für einen Molch (19) nach einem der vorangegangenen Ansprüche, **dadurch gekennzeichnet, dass** die Lagereinrichtung (6) mehrere entlang der Umfangsrichtung des Rotationsabschnitts (3) beabstandet zueinander angeordnete Antriebsräder (8) aufweist.

8. Antriebseinheit (1) für einen Molch (19) nach Anspruch 1, **dadurch gekennzeichnet, dass** die Axialführungseinrichtung (10) mindestens zwei in Umfangsrichtung auf gegenüberliegenden Seiten des Axialführungsabschnitts (4) angeordnete in einer radialen Richtung nach außen über das Gehäuse (2) vorspringende Axialführungselemente (11) aufweist.

9. Antriebseinheit (1) für einen Molch (19) nach Anspruch 1, **dadurch gekennzeichnet, dass** das Axialführungselement (11) mindestens ein bei einer bestimmungsgemäßen Benutzung der Antriebseinheit (1) an der Innenwandung (22) des Rohrabschnitts (23) anliegendes Axialführungsrad (13) aufweist, wobei die Rotationsachse (14) des mindestens einen Axialführungsrads (13) orthogonal zu der Rotationsachse (5) des Rotationsabschnitts (3) angeordnet ist.

10. Antriebseinheit (1) für einen Molch (19) nach einem der vorangegangenen Ansprüche, **dadurch gekennzeichnet, dass** das mindestens eine Antriebsrad (8) und/oder das mindestens eine Axialführungsrad (13) bei einem bestimmungsgemäßen Benutzung der Antriebseinheit (1) federbelastet an der Innenwandung (22) des Rohrabschnitts (23) anliegt.

11. Antriebseinheit (1) für einen Molch (19) nach einem der vorangegangenen Ansprüche, **dadurch gekennzeichnet, dass** die Antriebseinheit (1) einen zweiten entlang der Umfangsrichtung rotierbaren Rotationsabschnitt aufweist, wobei der zweite Rotationsabschnitt eine dem ersten Rotationsabschnitt (3) gegenläufige Rotationsrichtung aufweist, sodass sich das Drehmoment des ersten Rotationsabschnitts und das Drehmoment des zweiten Rotationsabschnitts kompensieren.

12. Antriebseinheit (1) für einen Molch (19) nach einem der vorangegangenen Ansprüche, **dadurch gekennzeichnet, dass** die Antriebseinheit (1) einen Elektromotor (24) aufweist, wobei die Rotation des ersten (3) und/oder des zweiten Rotationsabschnitts über den Elektromotor (24) antreibbar ist.

13. Antriebseinheit (1) für einen Molch (19) nach einem der vorangegangenen Ansprüche, **dadurch gekennzeichnet, dass** die Antriebseinheit (1) eine Energiespeichereinrichtung aufweist, wobei der Elektromotor (24) mit Hilfe der Energiespeichereinrichtung mit Energie versorgbar ist.

14. Antriebseinheit (1) für einen Molch (19) nach einem der vorangegangenen Ansprüche, **dadurch gekennzeichnet, dass** die Antriebseinheit (1) eine Reinigungsvorrichtung (20) aufweist, wobei die Reinigungsvorrichtung (20) dazu eingerichtet ist, die Innenwandung (22) des Rohrabschnitts (23) bei einer Verlagerung der Antriebseinheit (1) in dem Rohrabschnitts (23) zu reinigen.

15. Antriebseinheit (1) für einen Molch (19) nach Anspruch 14, **dadurch gekennzeichnet, dass** die Reinigungsvorrichtung (20) mindestens abschnittsweise in Umfangsrichtung an dem Gehäuse (2) angeordnet ist.
